# EUROPÄISCHE PATENTSCHRIFT

(11) **EP 1 499 826 B1**
(45) Veröffentlichungstag und Bekanntmachung des Hinweises auf die Patenterteilung: **05.07.2006**
(21) Anmeldenummer: 03732216.1
(22) Anmeldetag: 29.04.2003
(51) Int. Cl.: F16L 9/18, F16L 59/12

(54) **ROHRABZWEIGUNG FÜR EINE INNEN LIEGENDE ZIRKULATION**
PIPE BRANCH FOR AN INLYING CIRCULATION
PIECE D'EMBRANCHEMENT DE TUYAU DESTINEE A UNE CIRCULATION INTERIEURE

(30) Priorität: 29.04.2002 DE 10219071
(43) Veröffentlichungstag der Anmeldung: 26.01.2005
(73) Patentinhaber: Spiegel, Herbert, 97464 Niederwerrn (DE)
(72) Erfinder: Spiegel, Herbert, 97464 Niederwerrn (DE)
(74) Vertreter: Pöhner, Wilfried Anton, Dr.
(86) Internationale Anmeldenummer: PCT/DE2003/001381
(87) Internationale Veröffentlichungsnummer: WO 2003/093715

(56) Entgegenhaltungen:
- DE-A- 3 926 919
- DE-C- 369 398
- GB-A- 1 348 318
- GB-A- 2 159 598

## Beschreibung

Die Erfindung betrifft eine Rohrabzweigung für innen liegende Zirkulation mit einem Außenrohr und einem im Inneren des Außenrohrs verlaufenden Rohr mit kleinerem Durchmesser (Innenrohr) sowie einem Ausführungsstück, das aus einem Vollzylinder mit axialer Öffnung besteht, wobei das Innenrohr durch diese Öffnung läuft und das Ausfubrungsstück mit seiner Außenseite an der Innenseite des Außenrohrs anliegt.

Zentrale Warmwasserbereitungseinrichtungen weisen im Stand der Technik eine innere Ringleitung auf, durch die das Wässer zirkuliert und an die die Zapfstellen angeschlossen sind (DE 36 20 551). Auf diese Weise wird gewährleistet, dass auch nach einer längeren Entnahmepause an einer Zapfstelle sofort warmes Wasser bereitsteht. Die Rohrleitung, deren Außendurohmesser geringer ist als der innendurchmesser der äußeren Rohrleitung wird auch als innenliegende Zirkulation bezeichnet. Die Abzweigung des Innenrohrs als eigenständige Leitung verlangt eine sogenannte Ausführung des Innenrohrs aus dem Außenrohr. Neben der Abzweigung ist bei der Installation der Leitungen im Rahmen einer innenliegenden Zirkulation häufig auch das sogenannte Abfangen der innenliegenden Zirkulationsleitung erforderlich. Darunter versteht man, dass alleine die innenliegenden Zirkulationsleitung weitergeführt wird, während die außenliegenden Außenleitung endet Die Rohrabschnitte der Außenleitung werden in der Regel durch Rohre mit normierten Grössen verbunden. Das gleiche gilt auch für Abzweigungen.

Da die innenliegende Zirkulationsleitung sowohl im Hinblick auf die Wahl des Materials, als auch auf die Abmessungen bei verschiedenen Installationen unterschiedlich sein können, gibt es bislang kein einheitliches System von Adapterstücken, die eine schnelle. Ausführung oder ein einfaches Abfangen der innenliegenden Zirkulationsleitung ermöglichen. In der Regel handelt es sich um Sonderanfertigungen oder um Vorrichtungen, die unter großem Aufwand auf der Baustelle angepasst werden. Neben dem großen Zeitaufwand, der für die Fertigung erforderlich ist, haben diese Vorrichtungen jedoch meist einen zusätzlichen gravierenden Nachteil, der darin besteht, dass sich in den entsprechenden Wasserrohrabschnitten unmittelbar vor den Adapterstücken sogenanntes Stagnationswasser bildet Das Stagnationswasser entsteht, weil die Rohrabschnitte abseits von der Hauptflußrichtung liegen und deshalb nicht mit dem normalen Wasserdruck durchspült werden. Die in den Seiten- und Endabschnitten auftretenden schwachen Strömungsturbulenzen reichen nicht aus, um die Bildung von Ablagerungen, die Ansammlung von Schadstoffen und die Vermehrung krankheitsfördernder Substanzen zu verhindern.

Aus der GB 2 159 598 A ist eine doppelwandige Rohrleitung bekannt, wobei nur das innere Rohr zum Transport eines Madiums vorgesehen ist und der Zwischenraum zwischen Innen- und Außenrohr mit zwei Schichten thermischen Material ausgefüllt ist. In diesen Rohrleitungen sind Abzweigungen vorgesehen. Allerdings ist völlig unbekannt, das Innenrohr durch Ein- oder Ausfädeln in das Außenrohr einzuleiten oder herauszuführen.

Der Erfindung liegt das Problem zur Konstruktion eines Ausführungsstücks zugrunde, das als Passtück mit Adapterfunktion den Einsatz von normierten Außenröhren verschiedener Hersteller zur Ausführung oder zum Abfangen der innenliegenden Zirkulationsleitung erleichtern.

Erfindungsgemäß wird die Aufgabe durch ein Ausführungsstück gelöst, wobei das Außenrohr die Hauptleitung ist und das Ausführungsstück innerhalb oder an den Enden der axialen Öffnung eine oder mehrere Haltekanten für das Innenrohr aufweist.

Der Kemgedanke der Erfindung besteht darin, dass das Ausführungsstück zusammen mit einer Rohrabzweigung die schnelle Installation der Ausführung oder des Abfangens der innenliegenden Zirkulationsieltung erlaubt Dazu wird das mit einer axialen Öffnung versehene Ausführungsstück in das Außenrohr eingebracht, so dass die Außenseite des Ausführungsstücks an der Innenseite des Außenrohrs paßgenau anliegt. Eine eventuell efforderliche Feinanpassung des Außendurchmessers des Ausführungsstücks kann durch den Monteur bei geringem Zeitaufwand noch auf der Baustelle vorgenommen werden. Die im Inneren der axialen Öffnung angebrachten Halteringen sollen das innere Rohr fixieren und sein Zurückgleiten verhindern und können auf beiden Stirnseiten der Öffnung des Ausführungsstücks angebracht sein. Die Halterungen können auch als Haltenut, Haltenase oder als schräg-stehende, lamellenartige Haltefeder (Verzahnung) ausgestaltet sein.

Bei Befestigung von zwei Haltekanten an den gegenüberliegenden Stimseiten eines Ausführungsstücks kann das erfindungsgemäße Ausführungsstuck auch zur Überbrückung von zwei Abschnitten des Innenrohrs verwendet werden. Im Bereich der Überbrückung ist darüber hinaus die Anbringung von T-förmigen Abzweigungen des Innenrohrs möglich.

In einer bevorzugten Ausführungsform der Erfindung ist die einzelne Haltekante als Verzahnung mit Vorzugsnchtung ausgebildet. Die Flächen bzw. Kanten der Verzahnung, die aus einer oder mehreren schräg stehenden Lamellen bestehen, sind in der Öffnung des Ausführungsstücks angebracht Wenn es sich bei der Verzahnung um mehrere Lamellen handelt, so werden diese innerhalb der Öffnung des Ausführungsstücks auf gleicher Höhe angebracht und liegen sich gegenüber oder bilden einen Ring. Die erwähnte Vorzugsrichtung der Verzahnung kommt durch die Schrägstellung zustande, d.h. das Innenrohr wird in Richtung der Schrägstellung in das Ausführungsstück eingefügt; dabei liegen die Flächen bzw. Kanten der Verzahnung an der Außenseite der inneren Rohrleitung an. Bei einer Bewegung des Innenrohrs entgegen der Vorzugsrichtung dringen die Kanten der Verzahnung auf der Außenseite des Innenrohrs in das Material desselben ein und führen so bei Gegenzug einen arretierten Zustand herbei. Durch diese mechanische Wechselwirkung wird ein Zurückgleiten des Innenrohrs verhindert.

Bei Rohrleitungen, die übereinanderliegende Stockwerke verbinden, werden die Ausführungsstücke deshalb immer so eingebaut, dass die Verzahnung in der Öffnung des Ausführungsstücks zum oberen Stockwerk zeigt. Bei der Installation wird die Innenleitung schrittweise von unten in das Ausführungsstück geschoben, wobei die Verzahnung bei jedem Schritt das Zurückgleiten der Innenleitung verhindert. Die Fixierung der Innenleitung durch die Verzahnung bleibt natürlich auch nach Abschluss der Installation des Ausführungsstücks erhalten.

Natürlich kann die Vorzugsrichtung der Verzahnung zweier Halterungen, die auf den gegenüberliegenden Seiten der Öffnung des erfindungsgemäßen Ausführungsstücks vorgesehen sind, entgegengesetzt sein.

Der Erfinder hat erkannt, dass die Haltekante bzw. die Verzahnung, die das Zurückgleiten der Innenleitung verhindert, entweder im Zuge der Herstellung des Ausführungsstücks oder aber nachträglich einbaubar ist. Die Einbringung der Verzahnung im Zuge der Herstellung empfiehlt sich besonders, wenn das erfindungsgemäße Ausführungsstück aus Plastik besteht und durch Spritzgußverfahren hergestellt wird.

Von großen Vorteil ist das Merkmal der variablen Positionierbarkeit des erfindungsgemäßen Ausführungsstücks. Dadurch wird im Außenrohr Stagnationswasser vermieden und die Sicherung der Trinkwasserqualität sichergestellt. Generell wird zur Vermeidung von Stagnationswasser für das Ausführungsstück eine Position bevorzugt, bei der sich das in Hauptflussrichtung zeigende Ende des Ausführungsstücks möglichst nahe am Flüssigkeitsstrom befindet. Dieses Ziel wird dadurch erreicht, dass das Ausführungsstück bei variabler Länge innerhalb des Außenrohrs an verschiedenen Stellen positionierbar ist. Ein Ausführungsstück mit entsprechender Länge hat außerdem einen stabilisierenden Effekt gegenüber dem Innenrohr. Das ist besonders vorteilhaft, wenn das Innenrohr aus Kunststoff ist.

In einer weiteren bevorzugten Ausführungsform der Erfindung ist die Öffnung nicht koaxial, sondern schräg ansteigend in Richtung der Hauptflussrichtung ausgerichtet. Durch diese Ausrichtung wird ein Abknicken der Innenleitung unter dem Strömungsdruck der Flüssigkeit im Aussenrohr verhindert. Das ist besonders sinnvoll, wenn das Innenrohr aus Kunststoff besteht. Dieser Vorteil wird in einer besonders bevorzugten Ausführungsform, in der die Öffnung schräg ansteigend in Richtung der Hauptflussrichtung ausgerichtet ist, verstärkt durch eine zusätzliche Krümmung der Öffnung in dieselbe Richtung.

Es entspricht der Lehre der Erfindung, dass der Durchmesser und/oder die Wandstärke des Ausführungsstücks variabel ist. In einer besonders bevorzugten Ausführungsform wird das erfindungsgemäße Ausführungsstück zur Verbindung von zwei Abschnitten des Innenrohrs verwendet. In diesem Fall weist die Verzahnung der Halterungen, die an den beiden stirnseitigen Enden des Ausführungsstücks vorgesehen sind, im Hinblick auf ihre Verzahnung eine entgegengesetzte Vorzugsrichtung auf. Natürlich ist beim gleichen Verwendungszweck anstatt von Verzahnungen auch die Anbringung von Haltekanten zur Halterung der Innenrohre denkbar.

In einer Weiterführung kann das als Verbindungsstück gestaltete erfindungsgemäße Ausführungsstück auch zur Verzweigung der inneren Leitung eingesetzt werden. Dazu wird das Verbindungsstück auf Höhe der Verzweigung, deren Position durch die Abzweigung des äußeren Rohrs vorgegeben ist, mit einer Öffnung versehen. An dieser Öffnung kann in senkrechter Richtung oder unter Bildung eines spitzen Winkels ein zweites Ausführungsstück ebenfalls mittels Haltekante befestigt werden, wobei die beiden so zusammengefügten Ausführungsstücke innerhalb der äußeren Rohrleitung deren Geometrie folgen. Zur Befestigung der inneren Leitung am hinzugefügten Abschnitt des Ausführungsstücks dient ebenfalls eine Haltekante bzw. eine Verzahnung.

Das erfindungsgemässe Ausführungsstück erlaubt bei Bedarf die Installation von Dichtringen im Bereich der Öffnung zur zusätzlichen Abdichtung der inneren Zirkulation.

Es ist im Rahmen der Erfindung vorgesehen, dass das Ausführungsstück und die Haltekante bzw. die Verzahnung aus lebensmittelechtem Material besteht. Dadurch entspricht die Vorrichtung den hohen Ansprüchen zur Sicherung der Trinkwasserqualität.

Weitere Einzelheiten und Merkmale der Erfindung lassen sich dem nachfolgenden Beschreibungsteil der Zeichnungen entnehmen. Die Zeichnungen und die dazugehörigen Beschreibungen sollen die Erfindung jedoch nicht einschränken, sondern sie näher erläutern.

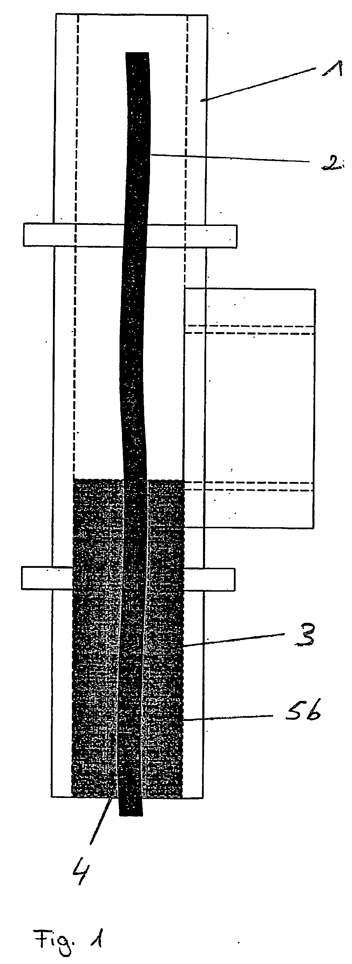

In Figur 1 ist das erfindungsgemäße Ausführungsstück 3 im eingebauten Zustand in einem Außenrohr 1 gezeigt. Die im gezeigten Fall koaxial verlaufende Öffnung 4 des Ausführungsstücks 3 enthält eine Verzahnung 5b, die das Zurückgleiten der in der Öffnung befindlichen inneren Leitung 2 verhindert. Das Ausführungsstück 3, welches das Außenrohr 1 in seiner Hauptflußrichtung nach unten begrenzt, ist in seiner Länge so bemessen, dass sich das in Haupiflußrichtung zeigende Ende des Ausführungsstücks 3 möglichst nahe am Flüssigkeitsstrom befindet, der durch die Öffnung im Außenrohr 1 oberhalb der oberen Kante des Ausführungsstücks 3 nach rechts abgelenkt wird. Durch diese Bemessung und Positionierung des Ausführungsstücks 3 wird Stagnationswasser verhindert. Dies hat den großen Vorteil, dass sich keine Ablagerungen bilden und krankheitsfördernde Substanzen vermehren können.

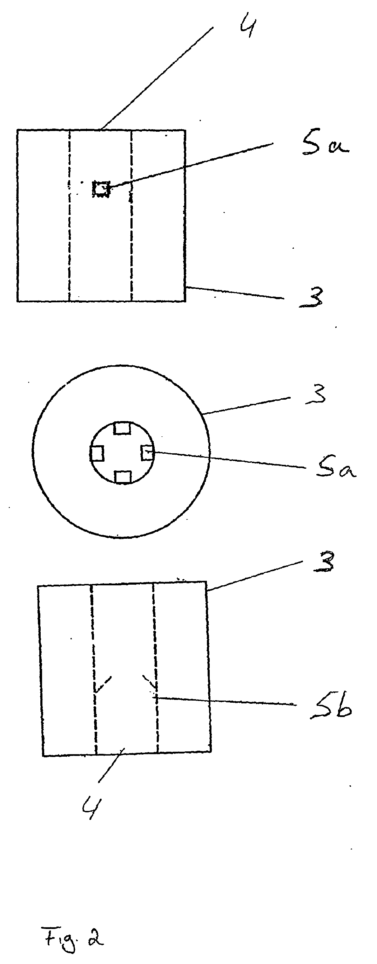

Figur 2 zeigt das erfindungsgemäße Ausführungsstück 3 in Einzeldarstellung und im Querschnitt, wobei die sich in der Öffnung des Ausführungsstücks 4 befindliche Halterung 5a für das Innenrohr in diesem Falle als Nase gestaltet ist. Das in einer Aufsichtszeichnung gezeigte Ausführungsstück 3 im darunter liegenden Bild zeigt vier äquidistant verteilte Halterungen 5a der gleichen Art. Als alternative Halterungsform zeigt das untere Bild eine Verzahnung 5b, die aus zwei schräg stehenden sich gegenüberliegenden lamellenartigen Strukturen bestehen. Die in diesem Fall nach oben gerichtete Verzahnung 5b erlaubt das Einführen der Innenleitung von unten nach oben, wobei sich die Kanten der Lamellen bei einer Bewegung der inneren Leitung in die Außenseite der Innenleitung einkerben und dadurch ein Herausgleiten der Innenleitung verhindern.

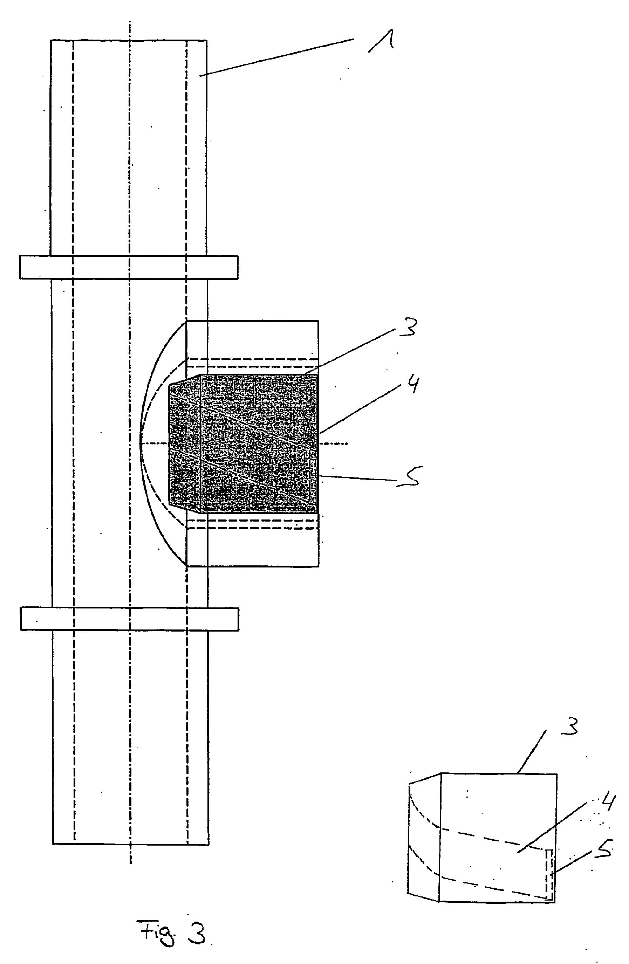

In Figur 3 ist gezeigt, wie sich das erfindungsgemäße Ausführungsstück 3 durch Einbau in ein T-Formstück 1 zur seitlichen Ausführung, der nicht dargestellten inneren Leitung, eignet. Die Öffnung 4 zur Durchführung der nicht dargestellten Innenleitung 2 verläuft im gezeigten Beispiel schräg. Ein zweites in Figur 3 gezeigtes Ausführungsstück 3 weist eine zusätzlich gekrümmt verlaufende Öffnung 4 auf. Der Durchmesser auf der zur Hauptflußrichtung hin gewandten Seite der Öffnung ist dabei etwas kleiner. Durch den schrägen bzw. gekrümmten Verlauf der Öffnung 4 wird das Risiko des Knickens der Innenleitung aufgrund des Drucks in der Hauptleitung in Flußrichtung verringert. Durch die schräge bzw. gekrümmte Öffnung bildet die Innenleitung einen spitzen Winkel zur Hauptleitung und wird dadurch gegen Abknicken stabilisiert.

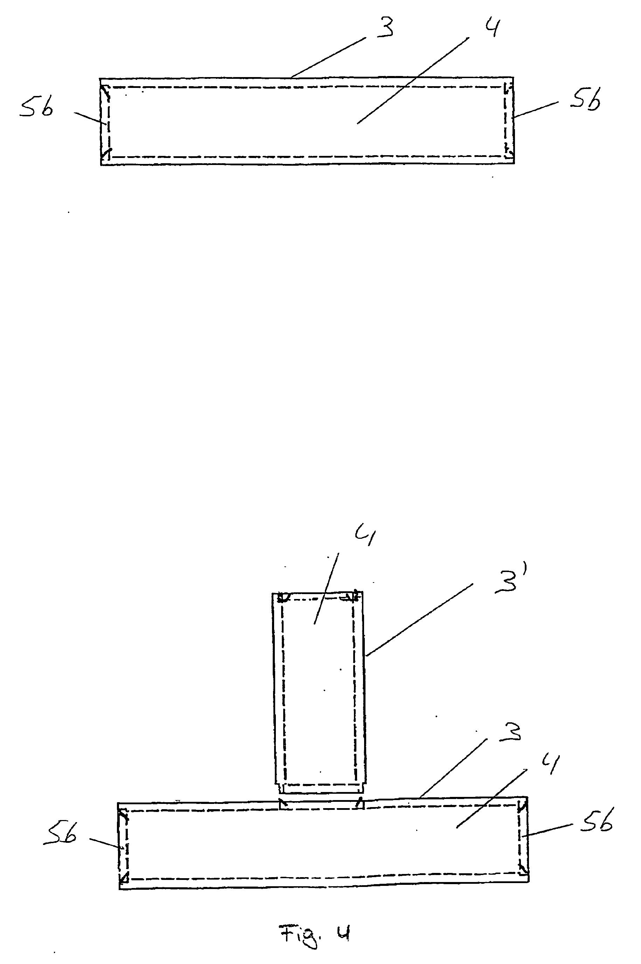

In Figur 4 oben ist das erfindungsgemäße Ausführungsstück 3 mit stark verjüngtem Durchmesser und stark verjüngter Wandstärke gezeigt. Auf beiden Enden befinden sich Halterungen 5b mit Vorzugsrichtung, wobei die Vorzugsrichtung beider Halterungen ins Innere der Öffnung 4 gerichtet ist. Ein Ausführungsstück 3 in der dargestellten Form kann zur Verbindung von zwei Abschnitten des Innenrohrs verwendet werden. Wird die seitliche Wandung eines solchen Ausführungsstücks mit einer Öffnung und zusätzlich mit einer Halterung versehen, wobei deren Vorzugsrichtung ebenfalls ins Innere der Öffnung 4 gerichtet ist, so kann an diese Öffnung zum Aufbau einer T-artigen Struktur ein zweiter Abschnitt des erfindungsgemäßen Ausführungsstück 3" angebracht werden.

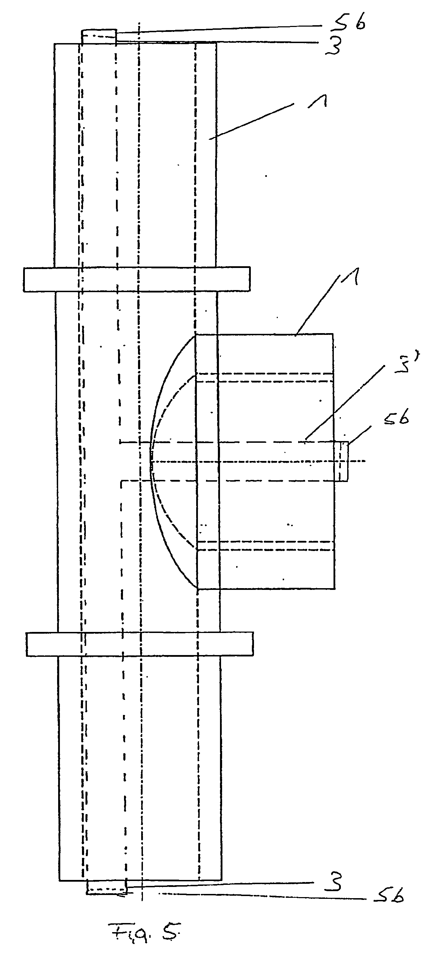

In Figur 5 ist die Installation eines solchen T-artigen Elementes aus den erfindungsgemäßen Ausführungsstücken 3 und 3' in einem Außenrohr, ebenfalls mit T-Form, zu sehen. Natürlich kann die Verzweigung auch derart angebracht sein, das sie nicht senkrecht von der Hauptleitung abgeht.

## Patentansprüche

1. Rohrabzweigung für eine innen liegende Zirkulation mit einem Außenrohr (1) und einem im Inneren des Außenrohrs verlaufenden Rohr mit kleinerem Durchmesser (innenrohr) (2) sowie einem Ausführungsstück (3), wobei
- das Ausführungsstück (3) aus einem Vollzylinder mit axialer Öffnung (4) besteht, wobei das Innenrohr (2) durch diese Öffnung (4) läuft,
- das Ausführungsstück (3) mit seiner Außenseite an der Innenseite des Außenrohrs (1) anliegt, **dadurch gekennzeichnet, dass** das Außenrohr (1) die Hauptleitung ist und das Ausführungsstück (3) innerhalb oder an den Enden der axialen Öffnung (4) eine oder mehrere Haltekaten für das innenrohr (5a) aufweist.

2. Rohrabzweigung für eine innen liegende Zirkulation mit Ausführungsstück (3) nach Anspruch 1, **dadurch gekennzeichnet, dass** die Haltekanten (5a) an einer Stelle oder sich gegenüberliegend oder ringförmig im Inneren der axialen Öffnung (4) angebracht sind.

3. Rohrabzweigung für eine innen liegende Zirkulation mit Ausführungsstück (3) nach Anspruch 1 und 2, **dadurch gekennzeichnet, dass** jede Haltekante (5a) als Verzahnung mit Vorzugsrichtung (5b) für die Einführung des Innenrohrs (2), ausgebildet ist.

4. Rohrabzweigung für eine innen liegende Zirkulation mit Ausführungsstück (3) nach einem der vorhergehenden Ansprüche, **dadurch gekennzeichnet, dass** die an der Außenseite der Innenleitung (2) anliegenden Flächen oder Kanten der Verzahnungen (5b) bei Bewegung des Innenrohrs (2) entgegen der Vorzugsrichtung einen arretierten Zustand herstellen.

5. Rohrabzweigung für eine innen liegende Zirkulation mit Ausführungsstück (3) nach einem der vorhergehenden Ansprüche, **dadurch gekennzeichnet, dass** die Orientierung der Vorzugsrichtungen der an gegenüberliegenden Enden des Ausführungsstücks vorgesehenen Verzahnungen (5b) entgegengesetzt oder gleichgerichtet sind.

6. Rohrabzweigung für eine innen liegende Zirkulation mit Ausführungsstück (3) nach einem der vorhergehenden Ansprüche, **dadurch gekennzeichnet, dass** die Verzahnung (5b) in die axiale Öffnung (4) im Zuge der Herstellung des Ausführungsstücks (3) oder nachträglich installierbar ist.

7. Rohrabzweigung für eine innen liegende Zirkulation mit Ausführungsstück (3) nach einem der vorhergehenden Ansprüche, **dadurch gekennzeichnet, dass** das Ausführungsstück (3) in der Länge variierbar ist.

8. Rohrabzweigung für eine innen liegende Zirkulation mit Ausführungsstück (3) nach einem der vorhergehenden Ansprüche, **dadurch gekennzeichnet, dass** das Ausführungsstück (3) innerhalb des Außenrohrs (1) an verschiedenen Stellen positionierbar sind, wobei bei ausreichender Länge des Ausführungsstücks (3) jeweils die Position bevorzugt ist, bei der sich das in Hauptflußrichtung zeigende Ende des Ausführungsstücks (3) möglichst nahe am Flüssigkeitsstrom befindet.

9. Rohrabzweigung für eine innen liegende Zirkulation mit Ausführungsstück (3) nach einem der vorhergehenden Ansprüche, **dadurch gekennzeichnet, dass** die axiale Öffnung (4) des Ausführungsstücks (3) koaxial oder schräg oder schräg und gekrümmt verläuft.

10. Rohrabzweigung für eine innen liegende Zirkulation mit Ausführungsstück (3) nach einem der vorhergehenden Ansprüche, **dadurch gekennzeichnet, dass** der Innendurchmesser der Öffnung (4) des Ausführungsstücks (3) auf der zur Hauptflußrichtung gerichteten Seite geringer ist als auf der gegenüberliegenden Seite.

11. Rohrabzweigung für eine innen liegende Zirkulation mit Ausführungsstück (3) nach einem der vorhergehenden Ansprüche, **dadurch gekennzeichnet, dass** der Durchmesser und/oder die Wandstärke des Ausführungsstücks (3) variierbar ist, wobei die Wandung eine Mindeststärke aufweist, welche die Installation von Haltekanten (5a, 5b) gewährleistet.

12. Rohrabzweigung für eine innenliegende Zirkulation mit Ausführungsstück (3) nach einem der vorhergehenden Ansprüche, **dadurch gekennzeichnet, dass** nach Öffnung der seitlichen Wandung eines Ausführungsstücks (3) oder Innenrohrs (2) an dieser Öffnung in senkrechter Richtung oder unter Bildung eines spitzen Winkels durch eine Haltekante ein zweites Ausführungstück (3) oder Innenrohr (2) befestigbar ist, wobei dieses anderenends mit einer zweiten Haltekante (5a, 5b) versehen ist.

13. Rohrabzweigung für eine innen liegende Zirkulation mit Ausführungsstück (3) nach einem der vorhergehenden Ansprüche, **dadurch gekennzeichnet, dass** bei der Installation des Ausführungsstücks (3) die Installation eines Dichtrings im Bereich der axialen Öffnung (4) vorgesehen ist.

14. Rohrabzweigung für eine innen liegende Zirkulation mit Ausführungsstück (3) nach einem der vorhergehenden Ansprüche, **dadurch gekennzeichnet, dass** das Ausführungsstück (3) und die Verzahnung (5b) aus lebensmittelechtem Material bestehen.

## Claims

1. The invention relates to a pipe branch for internal circulation, comprising an outer pipe (1) and a pipe (inner pipe) (2) with a smaller diameter, which runs inside the outer pipe, and of a lead-out piece (3), the lead-out piece consisting of a full cylinder having an axial opening (4), the inner pipe (2) extending through this opening (4) and the outer side of the lead-out piece resting against the inner side of the outer pipe (1), **characterised in that** the outer pipe (1) is the main line and the lead-out piece (3) has, within or at the ends of the axial opening (4), one or more retaining edges for the inner pipe (5a).

2. Pipe branch for internal circulation comprising a lead-out piece (3) according to claim 1, **characterised in that** the retaining edges (5a) are mounted at a point or opposing one another or in the form of a ring in the interior of the axial opening (4).

3. Pipe branch for internal circulation comprising a lead-out piece (3) according to claim 1 or 2, **characterised that** each retaining edge (5a) is designed as a toothing with a preferred direction (5b) for the introduction of the inner pipe (2).

4. Pipe branch for internal circulation comprising a lead-out piece (3) according one of the preceding claims, **characterised in that** the surfaces or edges of the toothings (5b) bearing against the outside of the inner pipe (2) produce a locked state on movement of the inner tube (2) in opposition to the preferred direction.

5. Pipe branch for internal circulation comprising a lead-out piece (3) according one of the preceding claims, **characterised in that** the preferred direction of the toothings (5b) provided on the opposite ends of the lead-out piece are in opposite or the same orientation.

6. Pipe branch for internal circulation comprising a lead-out piece (3) according one of the preceding claims, **characterised in that** the toothing (5b) can be installed in the axial opening (4) either in the course of manufacture of the lead-out piece (3) or retroactively.

7. Pipe branch for internal circulation comprising a lead-out piece (3) according one of the preceding claims, **characterised in that** the lead-out piece (3) is variable in length.

8. Pipe branch for internal circulation comprising a lead-out piece (3) according to one of the preceding claims, **characterised in that** the lead-out piece (3) can be positioned at various points within the outer pipe (1), wherein, with adequate length of the lead-out piece (3), the position is preferred in which that end of the lead-out piece (3) that faces in the main flow direction is located as close as possible to the liquid stream.

9. Pipe branch for internal circulation comprising a lead-out piece (3) according one of the preceding claims, **characterised in that** the axial opening (4) of the lead-out piece (3) runs coaxially or obliquely, or obliquely and curved.

10. Pipe branch for internal circulation comprising a lead-out piece (3) according one of the preceding claims, **characterised in that** the internal diameter of the opening (4) of the lead-out piece (3) is less at the side facing in the main flow direction that at the opposite side..

11. Pipe branch for internal circulation comprising a lead-out piece (3) according one of the preceding claims, **characterised in that** the diameter and/or the wall thickness of the lead-out piece (3) is variable, the wall having a minimum thickness that ensures the installation of retaining edges (5a, 5b)..

12. Pipe branch for internal circulation comprising a lead-out piece (3) according to one of the preceding claims, **characterised in that**, after the opening of the lateral wall of a lead-out piece (3) or inner pipe (2), a second lead-out piece (3) or inner pipe (2) can be fixed at this opening by means of a retaining edge in the vertical direction or with the formation of an acute angle, said second lead-out piece (3) or inner pipe (2) being provided at its other end with a second retaining edge (5a, 5b).

13. Pipe branch for internal circulation comprising a lead-out piece (3) according one of the preceding claims, **characterised in that**, with the installation of the lead-out piece (3), the installation of a sealing ring is provided in the region of the axial opening (4).

14. Pipe branch for internal circulation comprising a lead-out piece (3) according one of the preceding claims, **characterised in that** the lead-out piece (3) and the toothing (5b) are made of food-grade material.

## Revendications

1. Piquage pour une circulation interne avec un tube externe (1) et un tube courant à l'intérieur du tube avec un diamètre plus petit (tube interne) (2) ainsi qu'une pièce de sortie (3), sachant que la pièce de sortie (3) est constituée d'un cylindre plein à ouverture axiale (4), sachant que le tube interne (2) passe par cette ouverture (4), le côté externe de la pièce de sortie (3) repose sur le côté interne du tube externe (1), **caractérisé par le fait que** le tube externe (1) est la conduite principale et la pièce de sortie (3) présente à l'intérieur ou aux extrémités de l'ouverture axiale (4) un ou plusieurs rebords de retenue, pour le tube interne (5a).

2. Piquage pour une circulation interne avec pièce de sortie (3) selon la revendication 1, **caractérisé par le fait que** les rebords de retenue (5a) sont disposés à un endroit ou l'un en face de l'autre ou en forme d'anneau à l'intérieur de l'ouverture axiale (4).

3. Piquage pour une circulation interne avec pièce de sortie (3) selon les revendications 1 et 2, **caractérisé par le fait que** chaque rebord de retenue (5a) est formé en tant qu'engrenage avec direction préférée (5b) pour l'introduction du tube interne (2).

4. Piquage pour une circulation interne avec pièce de sortie (3) selon l'une des revendications précédentes, **caractérisé par le fait que** les surfaces ou bords de l'engrenage (5b) se trouvant sur le côté extérieur de la conduite intérieure (2) réalisent un arrêt lors du mouvement du tube interne (2) contre la direction préférée.

5. Piquage pour une circulation interne avec pièce de sortie (3) selon une des revendications précédentes, **caractérisé par le fait que** l'orientation des directions préférées des engrenages prévus sur les extrémités situées l'une en face de l'autre de la pièce de sortie sont orientées à l'inverse ou dans la même direction.

6. Piquage pour une circulation interne avec pièce de sortie (3) selon une des revendications précédentes, **caractérisé par le fait que** l'engrenage (5b) peut être installé dans l'ouverture axiale dans la foulée de la fabrication de la pièce de sortie (3) ou après coup.

7. Piquage pour une circulation interne avec pièce de sortie (3) selon une des revendications précédentes, **caractérisé par le fait que** la pièce de sortie (3) peut être variée en longueur.

8. Piquage pour une circulation interne avec pièce de sortie (3) selon une des revendications précédentes, **caractérisé par le fait que** la pièce de sortie (3) peut être positionnée à plusieurs endroits à l'intérieur du tube externe (1), sachant que dans le cas où la longueur de la pièce de sortie (3) est suffisante, est préférée à chaque fois la position dans laquelle l'extrémité montrant dans la direction principale du flux se trouve le plus prêt possible du courant du liquide.

9. Piquage pour une circulation interne avec pièce de sortie (3) selon une des revendications précédentes, **caractérisé par le fait que** l'ouverture axiale (4) de la pièce de sortie (3) court de façon coaxiale ou oblique ou oblique et recourbée.

10. Piquage pour une circulation interne avec pièce de sortie (3) selon une des revendications précédentes, **caractérisé par le fait que** le diamètre intérieur de l'ouverture (4) de la pièce de sortie (3) sur le côté orienté dans la direction principal du flux est inférieur au côté qui lui est opposé.

11. Piquage pour une circulation interne avec pièce de sortie (3) selon une des revendications précédentes, **caractérisé par le fait que** le diamètre et/ou l'épaisseur de la paroi de la pièce de sortie (3) est variable, sachant que la paroi présente une épaisseur minimale qui assure l'installation de rebords de retenue (5a, 5b).

12. Piquage pour une circulation interne avec pièce de sortie (3) selon une des revendications précédentes, **caractérisé par le fait qu'**après ouverture de la paroi latérale d'une pièce de sortie (3) ou tube interne (2) à cette ouverture, une seconde pièce de sortie (3) ou tube interne (2) peut être fixé à cette ouverture en direction verticale ou en formant un angle aigu à travers un rebord de retenue, sachant que ce dernier est pourvu d'un second rebord de retenue (5a, 5b) à l'autre extrémité.

13. Piquage pour une circulation interne avec pièce de sortie (3) selon une des revendications précédentes, **caractérisé par le fait que** lors de l'installation de la pièce de sortie (3) est prévue l'installation d'un joint d'étanchéité dans la zone de l'ouverture axiale (4).

14. Piquage pour une circulation interne avec pièce de sortie (3) selon une des revendications précédentes, **caractérisé par le fait que** la pièce de sortie (3) et l'engrenage (5b) sont composés d'un matériau apte au contact alimentaire.
